(19) **Europäisches Patentamt / European Patent Office / Office européen des brevets**

(11) **EP 1 854 971 B1**

(12) **EUROPÄISCHE PATENTSCHRIFT**

(45) Veröffentlichungstag und Bekanntmachung des Hinweises auf die Patenterteilung:
**05.08.2009 Patentblatt 2009/32**

(51) Int Cl.:
*F01N 3/023* *(2006.01)*    *F01N 9/00* *(2006.01)*

(21) Anmeldenummer: **06113653.7**

(22) Anmeldetag: **09.05.2006**

(54) **Verfahren und Vorrichtung zur Abschätzung der Rußbeladung eines Dieselpartikelfilters**

Method and apparatus for the estimation of the particle filter loading

Méthode et appareil pour estimer la charge en particules d'un filtre à particules

(84) Benannte Vertragsstaaten:
**DE FR GB**

(43) Veröffentlichungstag der Anmeldung:
**14.11.2007 Patentblatt 2007/46**

(73) Patentinhaber: **Ford Global Technologies, LLC Dearborn, MI 48126 (US)**

(72) Erfinder: **Yacoub, Yasser Mohammed Sayed 50858, Köln (DE)**

(74) Vertreter: **Drömer, Hans-Carsten et al Ford-Werke GmbH, Patentabteilung NH/364 Henry-Ford Str. 1 50725 Köln (DE)**

(56) Entgegenhaltungen:

| | |
|---|---|
| **EP-A- 1 296 032** | **EP-A- 1 475 523** |
| **DE-C1- 19 741 973** | **FR-A- 2 872 212** |
| **US-A1- 2004 159 099** | **US-B1- 6 405 528** |

- **PATENT ABSTRACTS OF JAPAN Bd. 1998, Nr. 14, 31. Dezember 1998 (1998-12-31) & JP 10 259711 A (MITSUBISHI AUTOMOB ENG CO LTD; MITSUBISHI MOTORS CORP), 29. September 1998 (1998-09-29)**

## Beschreibung

Die vorliegende Erfindung betrifft ein Verfahren und eine Vorrichtung zur Abschätzung der Russbeladung eines Dieselpartikelfilters.

In einem Dieselpartikelfilter (DPF) werden russhaltige Abgase bei Durchdringung der porösen Filterwand des DPF gefiltert. Um den Zeitpunkt für eine Regeneration des Filters zu erkennen, ist die möglichst genaue Kenntnis der Russbeladung des DPF von großer Bedeutung. Modellrechnungen, bei denen die sich pro Zeiteinheit ablagernde Russmenge abhängig von den Motorbetriebsbedingungen abgeschätzt und aufintegriert wird, sind mit großen Ungenauigkeiten behaftet. Aus diesem Grunde ist es grundsätzlich bekannt, die Russbeladung anhand des Druckabfalls über dem DPF abzuschätzen. Die zunehmende Russbeladung der Filterwand führt zu einem Anstieg des sich über dem DPF ausbildenden Differenzdruckes, welcher ferner eine Funktion des Abgasvolumenstroms sowie von Filtermaterialeigenschaften (Porosität) ist. Die Messung oder Abschätzung des Differenzdruckes (dP, in kPa) und der Volumenstromrate (dV, in m$^3$/s) bietet somit eine Möglichkeit, die Masse der ausgefilterten Russpartikel "on board" abzuschätzen und auf dieser Basis einen Regenerationsvorgang einzuleiten bzw. zu beenden.

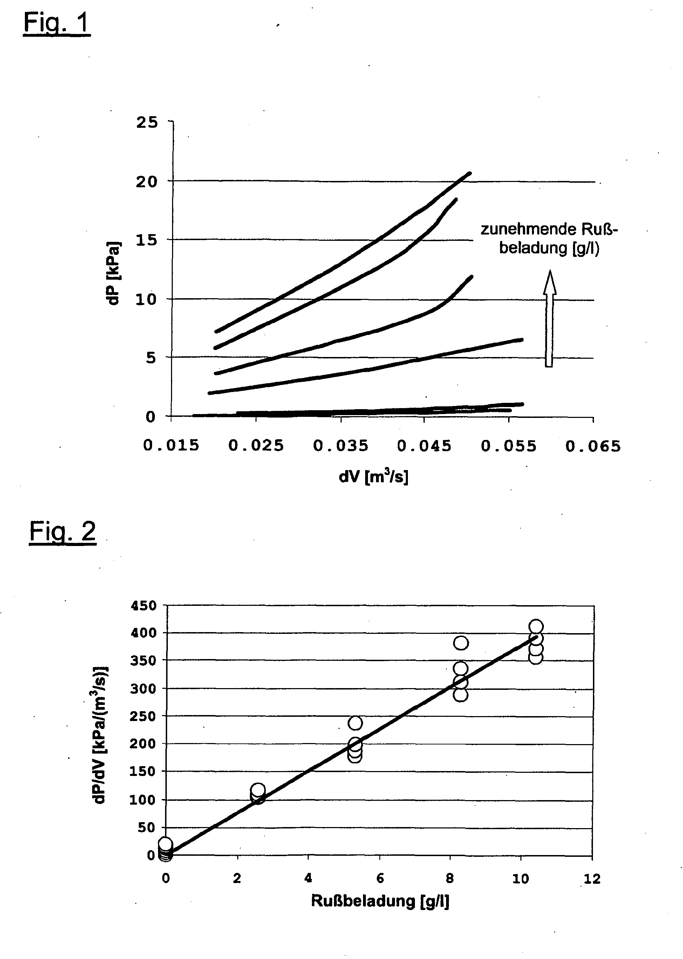

Es ist bekannt, gemäß Fig. 1 zur Abschätzung der Russbeladung zunächst für eine Mehrzahl von definierten bzw. vorbestimmten Russbeladungswerten (in g/l) die zugehörige (dP vs. dV)-Charakteristik zu ermitteln. Auf dieser Basis kann dann im späteren Betrieb die eigentliche "on-board"-Abschätzung der tatsächlichen Russbeladung mittels linearer Interpolation anhand der gemessenen (dP vs. dV)-Abhängigkeit durchgeführt werden. Es ist auch bekannt, zunächst gemäß Fig. 2 eine lineare Abhängigkeit der jeweils gemessenen Werte des Verhältnisses dP/dV von der Russbeladung zugrunde zu legen und dann im späteren Betrieb die eigentliche "on-board"-Abschätzung durch Berechnung des Verhältnisses dP/dV und Zuordnung des entsprechenden Wertes der Russbeladung vorzunehmen.

Bei den obigen Ansätzen erfolgt jeweils keine Abschätzung während transienter Betriebsphasen, und es wird ein zeitbasierter Schwellenwert verwendet, um die jeweilige Abschätzung zu bestätigen (d. h. es wird bestätigt, dass der sich aus den Messsignalen von dP bzw. dV ergebende Wert der Russbeladung für eine Mindestzeitdauer im Wesentlichen konstant ist bzw. innerhalb vorbestimmter Grenzen liegt). Das hieraus resultierende Fehlen von Messwerten während transienter Zustände ist zwar während der normalen Betriebsphase des Abgassystems mit kontinuierlicher Beladung in der Regel hinnehmbar, kann jedoch in der Regenerationsphase - insbesondere während überwiegend transienter Betriebsphasen - in unerwünschter Weise die Regenerationszeiten aufgrund zu seltener Messwertupdates verlängern.

Aus FR 2 872 212 A1 ist eine Vorrichtung zur Auswertung des Beladungszustandes einer Abgasreinigungsvorrichtung bekannt, welche Mittel zur Bestimmung eines im Bereich der Abgasreinigungsvorrichtung vorliegenden Druckes und Mittel zur Ermittlung eines stromaufwärts der Abgasreinigungsvorrichtung vorliegenden Volumengasstroms aufweist, wobei der Beladungszustand der Abgasreinigungsvorrichtung auf Basis der ermittelten Druck- und Volumengasstromwerte ermittelt und der Zustand der Abgasreinigungsvorrichtung anhand eines Vergleichs mit einem vorbestimmten Diagramm bewertet wird.

DE 197 41 973 C1 offenbart ein Verfahren zur Bestimmung der Russkonzentration einer Brennkraftmaschine, wobei die Russkonzentration unter Verwendung eines neuronalen Netzwerkes abgeleitet wird und wobei eine Bewertung des Fehlers anhand der Summe der Fehlerquadrate vorgenommen wird.

Aus US 2004/0159099 A1 ist eine Abgasemissionssteuerungsvorrichtung bekannt, bei der für unterschiedliche Mengen angesammelter Partikelbestandteile der Differenzdruck in Abhängigkeit von der Abgasvolumenfließrate in einem zweidimensionalen Kennfeld aufgetragen wird.

Aus EP 1 296 032 A1 sind ein Verfahren und eine Vorrichtung zur Steuerung eines Abgasnachbehandlungssystems bekannt, bei welchen der Beladungszustand des Partikelfilters durch Division des Differenzdruckes durch den Abgasvolumenstrom ermittelt wird.

Aus EP 1 475 523 A1 ist ein Verfahren zur Bestimmung der Filterpartikellast bekannt, wobei ebenfalls der Unterschied der Druckwerte am Eingang und am Ausgang des Filtermediums sowie die durch das Filtermedium strömende Gasmenge berücksichtigt werden.

Aus US 6,405,528 B1 ist ein Verfahren zur Bestimmung der Beladung eines Teilchenfilters im Abgasweg eines Motors bekannt, wobei eine Abschätzung der DPF-Beladung unter Verwendung von Gleichungen für laminare oder turbulente Strömung in Rohren durchgeführt wird.

Aus JP 10259711 ist bekannt, den Zeitpunkt zur Regeneration einer Abgasreinigungsvorrichtung auf Basis des Differenzdruckes unter Korrektur mittels eines Korrekturfaktors zu ermitteln.

Es ist Aufgabe der vorliegenden Erfindung, ein Verfahren und eine Vorrichtung zur Abschätzung der Russbeladung eines Dieselpartikelfilters bereitzustellen, durch das bzw. bei der die obigen Nachteile vermieden werden. Insbesondere wird durch die vorliegende Erfindung ein Verfahren und eine Vorrichtung geschaffen, welche eine zuverlässige und mit geringem Rechen- und Speicheraufwand realisierbare Abschätzung der Russbeladung mit ausreichenden Aktualisierungsraten auch bei transienten Motorzuständen ermöglichen.

Diese Aufgabe wird gemäß den Merkmalen der unabhängigen Patentansprüche gelöst.

Ein Verfahren zur Abschätzung der Russbeladung eines Dieselpartikelfilters weist folgende Schritte auf:

Ermitteln, zu einer Mehrzahl von Messzeitpunkten, jeweils eines Wertepaares ($\Delta P_i$, $\Delta V_i$), wobei jedes Wertepaar ($\Delta P_i$, $\Delta V_i$) einen ersten Wert ($\Delta P_i$) einer ersten Größe, die für den zu einem Messzeitpunkt über dem Dieselpartikelfilter sich ausbildenden Differenzdruck (dP) charakteristisch ist, und einen zweiten Wert einer zweiten Größe, die für den zu diesem Messzeitpunkt durch den Dieselpartikelfilter hindurchströmenden Abgasvolumenstrom (dV) charakteristisch ist, umfasst, und

Berechnen, aufgrund der ermittelten Wertepaare ($\Delta P_i$, $\Delta V_i$), eines Wertes einer dritten Größe (dP/dV), welche für die Rußbeladung des Dieselpartikelfilters charakteristisch ist,

wobei bei dem Berechnen der dritten Größe (dP/dV) ein Wertepaar ($\Delta P_i$, $\Delta V_i$) nur berücksichtigt wird, wenn von den folgenden Bedingungen:

a) der Abgasvolumenstrom liegt oberhalb eines unteren Schwellenwertes;

b) die Temperatur des Dieselpartikelfilters liegt oberhalb eines unteren Schwellenwertes, welcher davon abhängt, ob ein Regenerationsbetrieb vorliegt oder nicht;

c) der Abgasvolumenstrom liegt unterhalb eines oberen Schwellenwertes; und

d) für eine Zeitspanne oberhalb eines ersten Schwellenwertes im Leerlaufbetrieb wird das Wertepaar ($\Delta P_i$, $\Delta V_i$) nicht berücksichtigt, wobei diese Bedingung jedoch außer Kraft gesetzt wird, sobald die Zeitspanne oberhalb eines zweiten Schwellenwertes liegt

entweder wenigstens eine der Bedingungen b)-d) erfüllt ist oder sämtliche Bedingungen a)-d) erfüllt sind.

Bevorzugt erfolgt der Schritt des Berechnens unter Anwendung der Fehlerquadratmethode.

Gemäß einer bevorzugten Ausführungsform erfolgt der Schritt des Berechnens der dritten Größe (dP/dV) anhand der folgenden Beziehung:

$$dP/dV = \frac{\sum_{i=0}^{n} \Delta P_{korr,i} * \Delta V_i}{\sum_{i=0}^{n} (\Delta V_i)^2} \qquad (1).$$

wobei $\Delta P_{korr,i}$ einen korrigierten Differenzdruck bezeichnet, der aus dem zu dem Messzeitpunkt gemessenen Differenzdruck $\Delta P_i$, der zu dem Messzeitpunkt vorliegenden Abgasdichte und der zu dem Messzeitpunkt vorhanden Volumenstromrate durch Subtraktion eines quadratisch vom Abgasvolumenstrom abhängigen Korrekturterms berechnet wird.

Somit werden erfindungsgemäß in einem rekursiven Ansatz zu einem Zeitpunkt k die jeweiligen Summen

$\sum_{i=0}^{n} \Delta P_{korr,i} * \Delta V_i$ und $\sum_{i=0}^{n} \Delta V_i^2$ aus zurückliegenden Zeitpunkten gespeichert - es müssen also nicht die Einzelwerte, sondern lediglich die Summen gespeichert werden - und mittels der Fehlerquadratmethode ausgewertet. Aus dem so erhaltenen Wert dP/dV wird auf Basis eines berechneten Filtervolumens und eines empirisch bestimmten Zusammenhanges auf die Russbeladung geschlossen. Dabei wird als Filtervolumen ein effektives Leervolumen angesetzt, welches durch einen die Ansammlung von Verbrennungsrückständen bzw. Asche berücksichtigenden Korrekturwert berechnet wird.

Der o.g., quadratisch vom Abgasvolumenstrom abhängige Korrekturterm ist durch Kontraktions-/Expansionsverluste, Reibungsverluste an den Strömungsweg begrenzenden Wänden und Verluste an den undurchlässigen Kanalabschnitten bedingt. Hierdurch wird dem Umstand Rechnung getragen, dass der Anstieg des Differenzdruckes mit wachsender Russbeladung linear von der Volumenstromrate (für eine gegebene Russbeladung) abhängt, was durch die Linearisierung der gemessenen Differenzdrucksignale bzw. Abspaltung eines quadratisch von dem Abgasvolumenstrom abhängigen Terms bei der Fehlerquadratmethode berücksichtigt wird. Es wird somit jeweils aus dem gemessenen Differenzdrucksignal ein korrigiertes Differenzdrucksignal DPresDPFCor aufgrund der Beziehung (2)

$$DPresDPFCor = DPresDPF - (VolExh)^2 * RhoExh * FlowCoeffFilter\_Ct \qquad (2)$$

berechnet, wobei VolExh den Abgasvolumenstrom, RhoExh die Abgasdichte und FlowCoeffFilter_Ct eine (durch Vorkalibrierung gegebene) Konstante bezeichnen. Der gemäß Gleichung (2) zum Messzeitpunkt i erhaltene Wert DPresDPFCor geht dann als korrigierter $\Delta P_{korr,i}$ in die Berechnung der Größe dP/dV gemäß Gleichung (1) ein.

Die Robustheit der anhand von Gleichung (1) jeweils erhaltenen Abschätzung hängt zum einen von der Anzahl der während der Abschätzung aufgezeichneten Messwertpaare ($\Delta P_i$, $\Delta V_i$) und zum anderen von dem durchlaufenen Bereich des Abgasvolumenstroms ab, d.h. bei einem größeren durchlaufenen Bereich des Abgasvolumenstroms ist eine geringere Anzahl von aufgezeichneten Messwertpaaren ($\Delta P_i$, $\Delta V_i$) erforderlich. Die Aktualisierung gemäß Gleichung (1) erfolgt somit gemäß einer bevorzugten Ausführungsform rekursiv bis zum Erreichen einer maximalen Anzahl von Messwerten oder bis zur Abdeckung eines vorbestimmten Bereichs des Abgasvolumenstroms.

Die Erfindung betrifft ferner eine Vorrichtung zur Abschätzung der Russbeladung eines Dieselpartikelfilters, welche dazu ausgelegt ist, ein Verfahren mit den oben beschriebenen Merkmalen auszuführen.

Weitere Ausgestaltungen der Erfindung sind der Beschreibung sowie den Unteransprüchen zu entnehmen.

Die Erfindung wird nachstehend anhand einer bevorzugten Ausführungsform unter Bezugnahme auf die beigefügten Abbildungen erläutert.

Es zeigen:

Fig. 1 und 2    Diagramme zur Erläuterung der Bestimmung der Russbeladung nach dem Stand der Technik, und

Fig. 3 bis 9    Blockdiagramme in verschiedenen Abstraktionsstufen zur Erläuterung der Funktionsweise der Russbeladungsbestimmung gemäß der vorliegenden Erfindung, und

Fig. 10    ein Plots, in denen der Verlauf der dP/dV-Bestimmung im Stadtverkehr sowie im Autobahnbetrieb beispielhaft dargestellt sind.

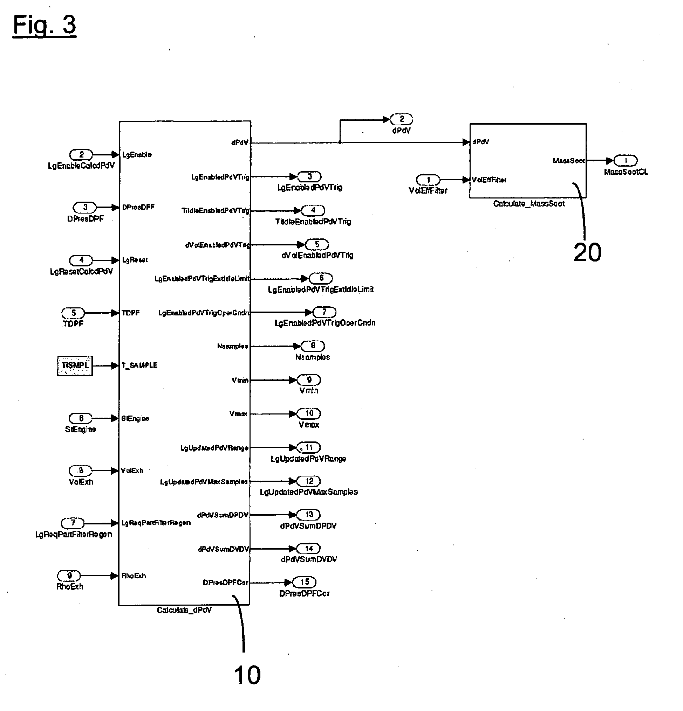

Gemäß Fig. 3, welche ein Übersichtsdiagramm zur Implementierung des erfindungsgemäßen Verfahrens zeigt, wird die Russbeladung des Dieselpartikelfilters aus der zuvor in einem mit einem mit der Bezugsziffer 10 bezeichneten Modul Calculate_dPdV berechneten Steigung dP/dV sowie aus dem effektiven Leervolumen des Dieselpartikelfilters mit einem mit der Bezugsziffer 20 bezeichneten Modul Caiciuate_MassSoot ermittelt. Gemäß Fig. 3 wird somit im Modul Caiciuate_MassSoot (Bezugsziffer 20) auf Basis des erhaltenen Wertes von dP/dV die Russbeladung bestimmt, was beispielsweise anhand einer in dem Modul Calculate_MassSoot gespeicherten Kurve erfolgen kann, welche die einem jeweiligen Wert dP/dV unter Berücksichtigung des Filtervolumens entsprechende Russbeladung enthält. Dabei wird als Filtervolumen vorzugsweise gemäß Fig. 3 ein effektives Leervolumen verwendet, welches zuvor durch einen die Ansammlung von Verbrennungsrückständen bzw. Asche berücksichtigenden Korrekturwert berechnet worden ist.

Dabei ist die Bedeutung der einzelnen in Fig. 3 angegebenen Eingangsgrößen, auf deren Basis in dem Modul Calculate_dPdV die Berechnung von dP/dV durchgeführt, wie folgt:

LgEnableCalcdPdV    logischer Wert, der angibt, ob eine Berechnung von dPdV erlaubt bzw. freigegeben ist;

DPresDPF    Differenzdruck;

LgResetCalcdPdV    logischer Wert, der angibt, ob Neustart der Berechnung erfolgen soll;

TDPF    DPF-Temperatur;

TiSMPL    Abtastzeit (z. B. 10ms, 100ms etc);

StEngine    Zustand des Motors (z. B. Leerlauf);

VolExh    Abgasvolumenstrom;

LgReqPartFilterRegen    logischer Wert, der angibt, ob Regeneration erfolgt oder nicht;

RhoExh    Abgasdichte;

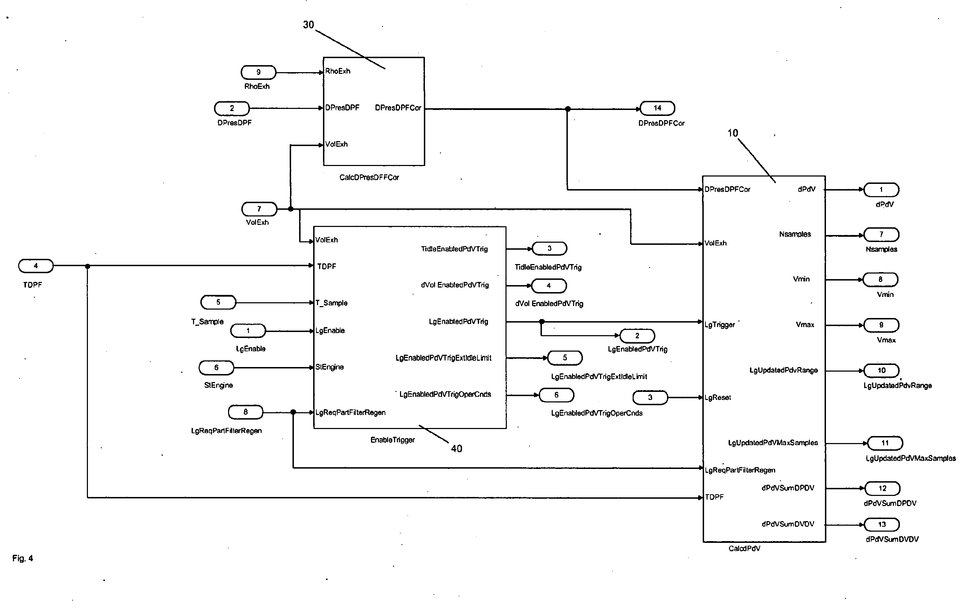

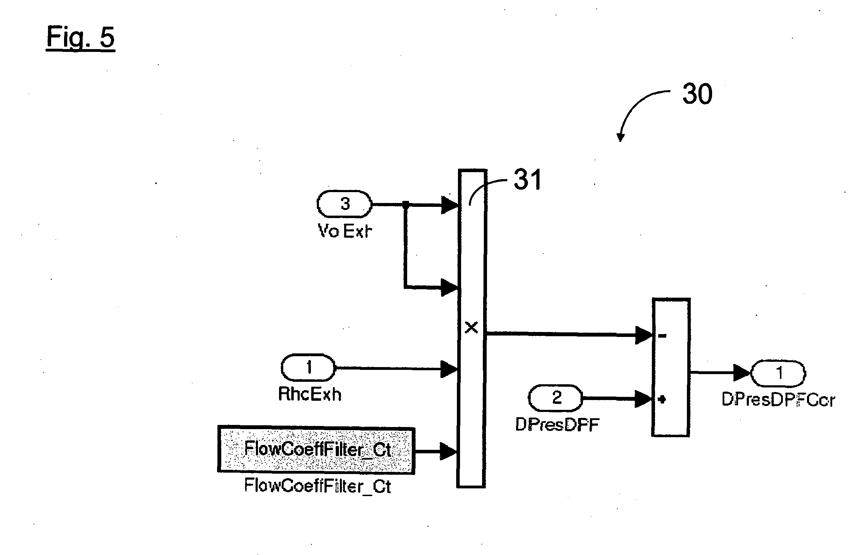

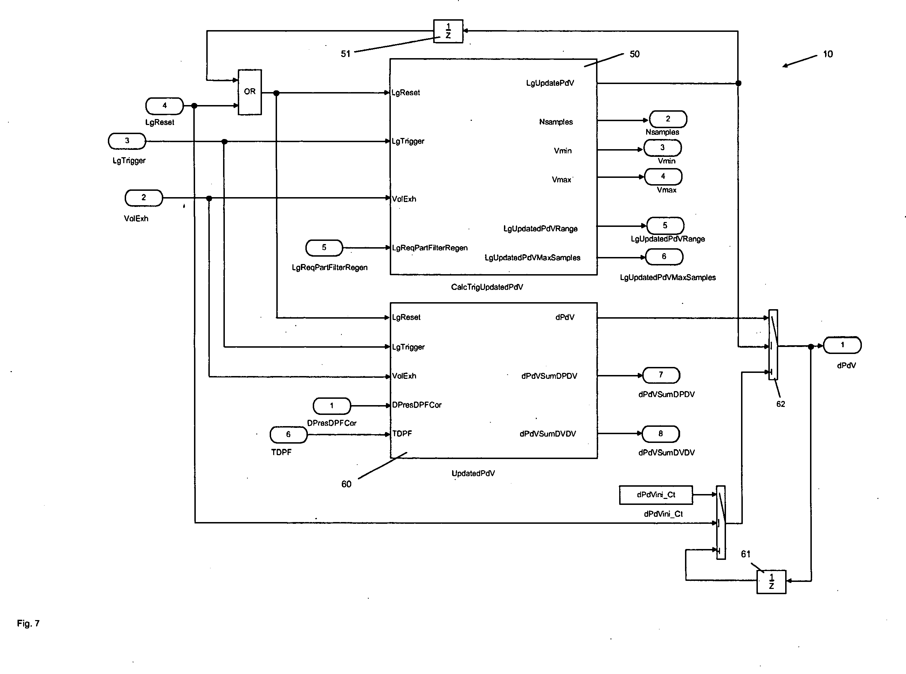

Des Weiteren wird gemäß Fig. 4 und der detaillierteren Darstellung von Fig. 5 in einem mit der Bezugsziffer 30 bezeichneten Modul CalcDPresDPFCor ein letztendlich bei der Berechnung des Terms dP/dV anhand von Gleichung (1) im Modul 10 von Fig. 7 verwendetes, korrigiertes Differenzdrucksignal DPresDPFCor verwendet. Dabei wird von dem gemessenen Differenzdrucksignal DPresDPF ein quadratisch von dem Abgasvolumenstrom abhängiger Korrekturterm gemäß der nachfolgenden Gleichung (2) subtrahiert, wobei dieser Korrekturterm durch Kontraktions-/Expansionsverluste, Reibungsverluste an den Strömungsweg begrenzenden Wänden und Verluste an den undurchlässigen Kanalabschnitten bedingt ist. Wie aus Fig. 5 ersichtlich, ergibt sich das korrigierte Differenzdrucksignal DPresDPFCor aus dem gemessenen Differenzdrucksignal DPresDPF aufgrund der Beziehung (2)

$$\text{DPresDPFCor} = \text{DPresDPF} - (\text{VolExh})^2 * \text{RhoExh} * \text{FlowCoeffFilter\_Ct} \qquad (2)$$

wobei VolExh den Abgasvolumenstrom, RhoExh die Abgasdichte und FlowCoeffFilter_Ct eine (durch Vorkalibrierung gegebene) Konstante bezeichnen. Die quadratische Abhängigkeit vom Abgasvolumenstrom ist in Fig. 5 dadurch dargestellt, dass die Größe VolExh zweifach in das Multiplikationsglied 31 eingeht.

Der gemäß Gleichung (2) zum Messzeitpunkt i erhaltene Wert DPresDPFCor geht dann als korrigierter $\Delta P_{korr,i}$ in die Berechnung gemäß Gleichung (1) ein.

Hierdurch wird dem Umstand Rechnung getragen, dass der Anstieg des Differenzdruckes mit wachsender Russbeladung linear von der Volumenstromrate (für eine gegebene Russbeladung) abhängt, was durch die Linearisierung der gemessenen Differenzdrucksignale bzw. Abspaltung des o.g. Korrekturterms bei der Fehlerquadratmethode berücksichtigt wird.

Das Modul Calculate_dPdV (Bezugsziffer 10) ist in Fig. 7 detaillierter dargestellt. Im Modul Calculate_dPdV werden insbesondere aus zu diskreten Zeitpunkten k ermittelten Messwertpaaren ($\Delta P_i$, $\Delta V_i$) die Summen

$$\sum_{i=0}^{n} \Delta P_{korr,i} * \Delta V_i \quad \text{und} \quad \sum_{i=0}^{n} \Delta V_i^2 \quad \text{berechnet und hieraus rekursiv der Term dP/dV gemäß Gleichung (1)}$$

$$dP/dV = \frac{\sum_{i=0}^{n} \Delta P_{korr,i} * \Delta V_i}{\sum_{i=0}^{n} (\Delta V_i)^2} \qquad (1)$$

ermittelt, wie anhand von Fig. 7 näher erläutert wird. Dabei wird anstelle des jeweils gemessenen Differenzdrucksignals DPresDPF das jeweilige korrigierte Differenzdrucksignal DPresDPFCor verwendet, wie bereits anhand von Fig. 4 und 5 beschrieben wurde.

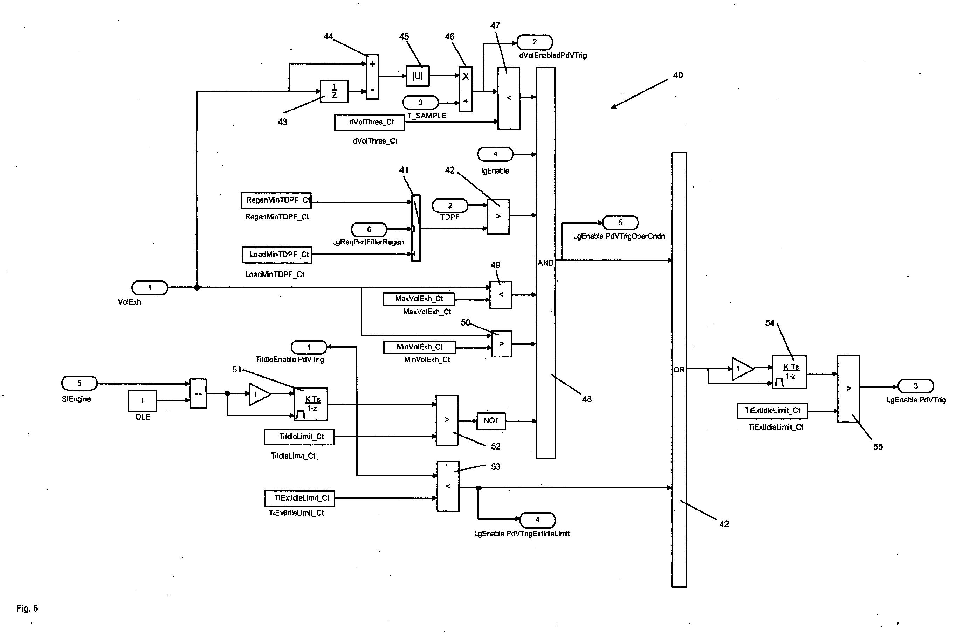

Des Weiteren erfolgt die Berücksichtigung eines Wertepaares ($\Delta P_i$, $\Delta V_i$) bei Berechnung des Terms dP/dV gemäß Gleichung (1) in dem Modul Calculate_dPdV gemäß Fig. 4 nur unter der Voraussetzung einer Freigabe durch das mit der Bezugsziffer 40 bezeichnete und in Fig. 6 detaillierter dargestellte Modul EnableTrigger. In Fig. 6 ist hierzu im Einzelnen dargestellt, dass die Freigabe der im Modul 10 erfolgenden dP/dV-Berechnung durch das Modul Enable-Trigger unter vorbestimmten Bedingungen erfolgt. Im Einzelnen wird bei der Durchführung der Fehlerquadratmethode ein Wertepaar ($\Delta P_i$, $\Delta V_i$) nur berücksichtigt, wenn von den folgenden Bedingungen:

a) der Abgasvolumenstrom liegt oberhalb eines unteren Schwellenwertes;

b) die Temperatur des DPF liegt oberhalb eines unteren Schwellenwertes, welcher davon abhängt, ob ein Regenerationsbetrieb vorliegt oder nicht;

c) der Abgasvolumenstrom liegt unterhalb eines oberen Schwellenwertes; und

d) für eine Zeitspanne oberhalb eines ersten Schwellenwertes im Leerlaufbetrieb wird das Wertepaar ($\Delta P_i$, $\Delta V_i$) nicht berücksichtigt, wobei diese Bedingung jedoch außer Kraft gesetzt wird, sobald die Zeitspanne oberhalb eines zweiten Schwellenwertes liegt;
entweder wenigstens eine der Bedingungen b)-d) erfüllt ist oder sämtliche Bedingungen a)-d) erfüllt sind.

In Fig. 6 ist mit dem Bezugszeichen 41 ein Schalter bezeichnet, welcher so arbeitet, dass in das nachfolgende, mit dem Bezugszeichen 42 und dem Symbol ">" bezeichnete Vergleichsglied bei Schalterstellung 1 (entsprechend dem logischen Wert "Wahr") der Wert RegenMinTDPF_Ct und bei Schalterstellung 0 (entsprechend dem logischen Wert "Falsch") der Wert LoadMinTDPF_Ct eingeht.

Hierbei wird die Filtertemperatur TDPF berücksichtigt, welche wie oben ausgeführt oberhalb eines unteren Schwellenwertes liegen muss, der davon abhängt, ob ein Regenerationsbetrieb vorliegt oder nicht.

Mit dem Bezugszeichen 43 und dem Symbol "1/z" ist in Fig. 6 ein Rückführungsglied bezeichnet, welches bewirkt, dass jeweils der vorhergehende Wert des Abgasvolumenstroms in das nachfolgende Subtraktionsglied 44 sowie ein hierauf folgendes Absolutglied 45 eingeht. In einem nachfolgenden Divisionsglied 46 wird der in dem Absolutglied 45 erhaltene Absolutbetrag durch die Abtastzeit T_sampie dividiert. Der so erhaltene Wert wird in dem Vergleichglied 47 mit einem konstanten Schwellenwert dVolThres_Ct verglichen. Bei Überschreitung dieses Schwellenwertes erfolgt wegen zu starker Änderung keine Freigabe der Berechnung in dem nachfolgenden "Und"-Glied 48.

Gemäß den weiteren Vergleichsgliedern 49 und 50 erfolgt die Freigabe in dem "Und"-Glied 48 nur bei Unterschreiten eines maximalen Volumenstroms MaxVolExh_Ct und bei Überschreiten eines minimalen Volumenstroms MinVolExh_Ct (die Endung_Ct steht jeweils für eine Konstante bzw. einen durch vorherige Kalibrierung erhaltenen Wert). Mit dem Bezugszeichen 51 ist in Fig. 6 ein Integrator (Timer) bezeichnet, der für den Fall, dass der Motorzustand "StEngine" für eine Zeitspanne oberhalb eines Schwellenwertes TildleLimit_Ct (z.B. 30-40 s) ein Leerlaufzustand ist, wie anhand des Vergleichgliedes 52 festgestellt wird, die Berechnung nicht freigibt. Wenn andererseits die Zeitspanne oberhalb eines zweiten Schwellenwertes TiExtldleLimit_Ct liegt, wie anhand des Vergleichgliedes 53 festgestellt wird, erfolgt eine Freigabe.

Mit dem Bezugszeichen 54 ist in Fig. 6 ein Integrator (Timer) bezeichnet, dem ein Vergleichsglied 55 nachgeschaltet ist, so dass eine Freigabe der Berechnung nur erfolgt, wenn eine bestimmte Zeitspanne TiConfirmSS_Ct überschritten wird (d. h., dass die o. g. Bedingungen für die besagte Mindestzeitspanne erfüllt sein müssen).

In Fig. 7 ist das Modul Calculate_dPdV (Bezugsziffer 10) zur Berechnung von dP/dV detaillierter dargestellt. Dabei erfolgt unter der Bedingung, dass in einem mit der Bezugsziffer 50 bezeichneten Modul CalcTrigUpdatedPdV die Aktualisierung des dP/dV-Signals freigegeben wird, in einem mit der Bezugsziffer 60 bezeichneten Modul UpdatedPdV die Berechnung der Steigung dP/dV nach der Fehlerquadratmethode, wobei die Beziehung (1) zugrundegelegt wird.

$$dP/dV = \frac{\sum_{i=0}^{n} \Delta P_{korr,i} * \Delta V_i}{\sum_{i=0}^{n} (\Delta V_i)^2} \qquad (1)$$

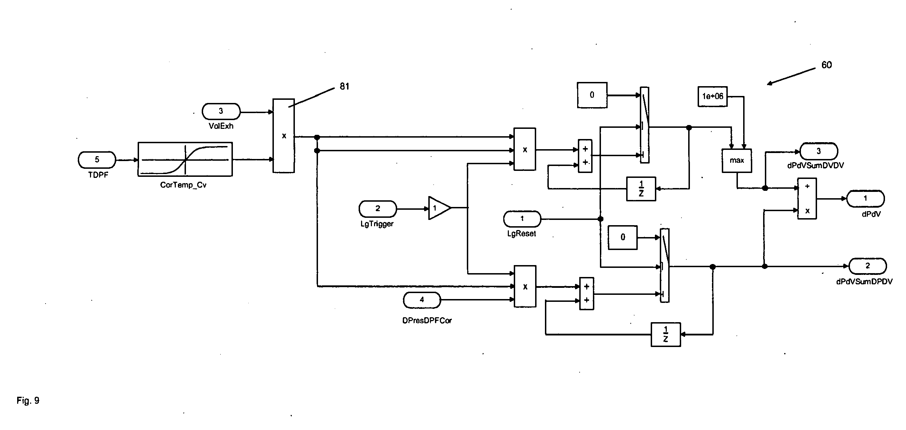

Gemäß Fig. 9 ist das Modul UpdatedPdV (Bezugsziffer 60) detaillierter dargestellt, welches die Fehlerquadratmethode anwendet, um die gewünschte Steigung dP/dV zu ermitteln. Das verwendete Temperatursignal wird vor Eingabe in das Multiplikationsglied 81 durch Berücksichtigung viskositätsbedingter Schwankungen korrigiert. Sodann werden gemäß Fig. 9 in einem rekursiven Ansatz werden zu einer Mehrzahl von Zeitpunkten die jeweiligen Summen

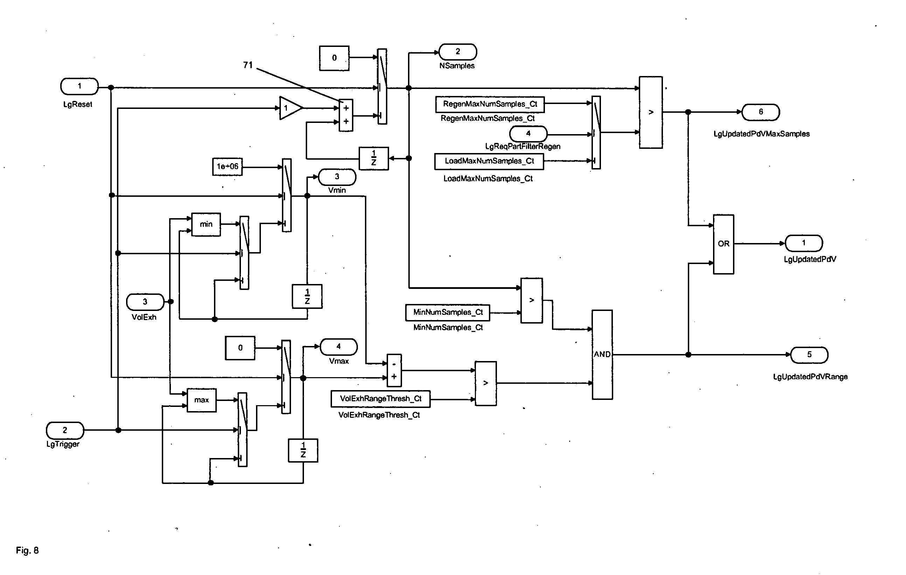

$\sum_{i=0}^{n} \Delta P_{korr,i} * \Delta V_i$ und $\sum_{i=0}^{n} \Delta V_i^2$ aus zurückliegenden Zeitpunkten gespeichert und mittels der Fehlerquadratmethode ausgewertet. Dabei wird im Modul 60, wie durch das Rückführglied 61 dargestellt ist, die sich aus der Durchführung der Fehlerquadratmethode ergebende Anpassung (Fit) verwendet, um den zuletzt ermittelten dP/dV-Wert zu aktualisieren, woraufhin eine neue Anpassungs-Periode (Fit-Periode) gestartet wird. Die rekursive Aktualisierung erfolgt gemäß Fig. 8 entweder bis zum Erreichen einer maximalen Anzahl von Messwerten oder bis zur Abdeckung eines vorbestimmten dV-Bereichs (hierzu werden im Modul 50 von Fig. 7 ein minimaler Volumenstrom Vmin und ein maximaler Volumenstrom berechnet). Mit dem Bezugszeichen 71 ist in Fig. 6 ein als Integrator wirkendes Summierglied bezeichnet, in welchem die Anzahl der erfolgten Abtastvorgänge aufsummiert wird. Der Grenzwert der maximalen Anzahl von Messwerten ist abhängig davon, ob eine Regeneration durchgeführt wird oder nicht (wobei eine langsamere Aktualisierung während der Beladung erfolgen kann). Mit dem Bezugszeichen 62 ist in Fig. 6 ein Schalter bezeichnet, der bei Schalterstellung 1 (entsprechend dem logischen Wert "Wahr") den neu berechneten Wert berücksichtigt und bei Schalterstellung 0 (entsprechend dem logischen Wert "Falsch") den vorangegangenen Wert (d. h. den Wert nach der letzten Aktualisierung) berücksichtigt.

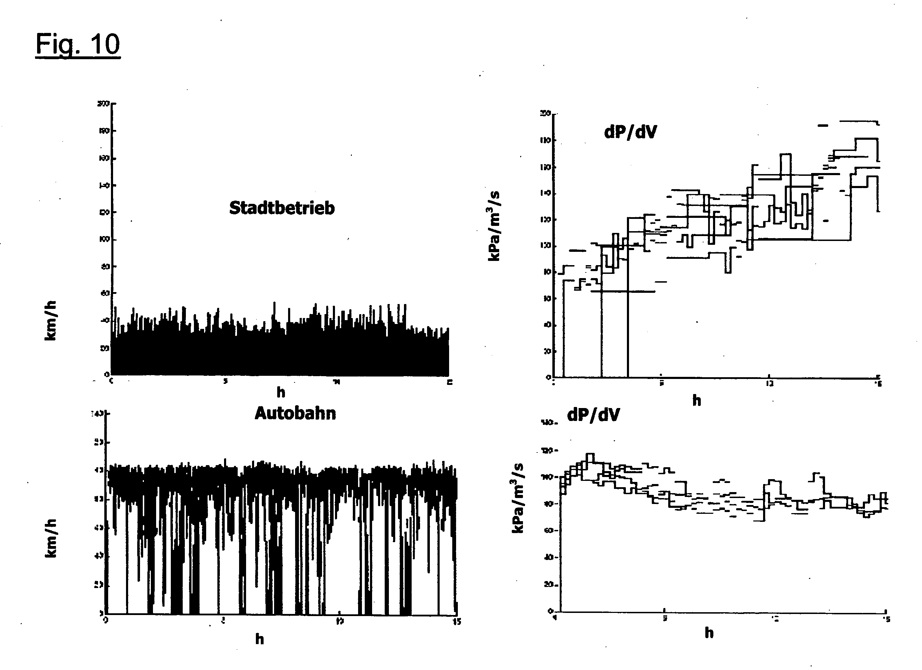

In Figur 10 ist der Verlauf der dP/dV Bestimmung im Stadtbetrieb (oben) und im Autobahnbetrieb (unten) exemplarisch dargestellt. Jeweils links ist das Geschwindigkeitsprofil dargestellt; rechts daneben sind mehrere bei dem Geschwindigkeitsprofil aufgenommene Messreihen zur dP/dV-Bestimmung wiedergegeben. Wie ersichtlich, wird dP/dV jeweils stufenförmig aktualisiert, sobald ein neues Update vorliegt. Im Autobahnbetrieb sind die Schwankungen des dP/dV erwartungsgemäß kleiner als im ausgesprochenen Stadtbetrieb.

**Patentansprüche**

1. Verfahren zur Abschätzung der Rußbeladung eines Dieselpartikelfilters,
   wobei das Verfahren folgende Schritte aufweist:

   Ermitteln, zu einer Mehrzahl von Messzeitpunkten, jeweils eines Wertepaares ($\Delta P_i$, $\Delta V_i$), wobei jedes Wertepaar ($\Delta P_i$, $\Delta V_i$) einen ersten Wert ($\Delta P_i$) einer ersten Größe, die für den zu einem Messzeitpunkt über dem Dieselpartikelfilter sich ausbildenden Differenzdruck (dP) charakteristisch ist, und einen zweiten Wert einer zweiten Größe, die für den zu diesem Messzeitpunkt durch den Dieselpartikelfilter hindurchströmenden Abgasvolumenstrom (dV) charakteristisch ist, umfasst;
   Berechnen, aufgrund der ermittelten Wertepaare ($\Delta P_i$, $\Delta V_i$), eines Wertes einer dritten Größe (dP/dV), welche für die Rußbeladung des Dieselpartikelfilters charakteristisch ist,
   **dadurch gekennzeichnet, dass**
   bei dem Berechnen der dritten Größe (dP/dV) ein Wertepaar ($\Delta P_i$, $\Delta V_i$) nur berücksichtigt wird, wenn von den folgenden Bedingungen:

   a) der Abgasvolumenstrom liegt oberhalb eines unteren Schwellenwertes;
   b) die Temperatur des Dieselpartikelfilters liegt oberhalb eines unteren Schwellenwertes, welcher davon abhängt, ob ein Regenerationsbetrieb vorliegt oder nicht;
   c) der Abgasvolumenstrom liegt unterhalb eines oberen Schwellenwertes; und
   d) für eine Zeitspanne oberhalb eines ersten Schwellenwertes im Leerlaufbetrieb wird das Wertepaar ($\Delta P_i$, $\Delta V_i$) nicht berücksichtigt, wobei diese Bedingung jedoch außer Kraft gesetzt wird, sobald die Zeitspanne oberhalb eines zweiten Schwellenwertes liegt
   entweder wenigstens eine der Bedingungen b)-d) erfüllt ist oder sämtliche Bedingungen a)-d) erfüllt sind.

2. Verfahren nach Anspruch 1,
   **dadurch gekennzeichnet, dass**
   der Schritt des Berechnens unter Anwendung der Fehlerquadratmethode erfolgt.

3. Verfahren nach Anspruch 1 oder 2,
   **dadurch gekennzeichnet, dass**
   der Schritt des Berechnens der dritten Größe (dP/dV) anhand der folgenden Beziehung erfolgt:

$$dP/dV = \frac{\sum_{i=0}^{n} \Delta P_{korr,i} * \Delta V_i}{\sum_{i=0}^{n} (\Delta V_i)^2}.$$

   wobei $\Delta P_{korr,i}$ einen korrigierten Differenzdruck bezeichnet, der aus dem zu dem Messzeitpunkt gemessenen Differenzdruck $\Delta P_i$ durch Subtraktion eines quadratisch vom Abgasvolumenstrom abhängigen Korrekturterms berechnet wird.

4. Verfahren nach Anspruch 3,
   **dadurch gekennzeichnet, dass**
   die Berechnen der dritten Größe (dP/dV) rekursiv bis zum Erreichen einer maximalen Anzahl von Messwerten oder bis zur Abdeckung eines vorbestimmten Bereiches des Abgasvolumenstroms durchgeführt wird.

5. Vorrichtung zur Abschätzung der Rußbeladung eines Dieselpartikelfilters,
   **dadurch gekennzeichnet, dass**
   die Vorrichtung ausgelegt ist, ein Verfahren nach einem der vorhergehenden Ansprüche auszuführen.

**Claims**

1.  Method for estimating the soot charge of a diesel particulate filter, having the following steps:

    respectively determining a value pair ($\Delta P_i$, $\Delta V_i$) in relation to a plurality of measurement instants, each value pair ($\Delta P_i$, $\Delta V_i$) comprising a first value ($\Delta P_i$) of a first variable which is characteristic of the differential pressure (dP) forming at a measurement
    instant over the diesel particulate filter, and a
    second value of a second variable which is characteristic of the exhaust gas volume flow (dV) flowing through the diesel particulate filter at this measurement instant; and
    calculating on the basis of the determined value pairs ($\Delta P_i$, $\Delta V_i$) a value of a third variable (dP/dV) which is characteristic of the soot charge of the diesel particulate filter,
    **characterized in that** a value pair ($\Delta P_i$, $\Delta V_i$) is taken into account when, of the following conditions, calculating the third variable (dP/dV) only when:

    a) the exhaust gas volume flow lies above a lower threshold value;
    b) the temperature of the diesel particulate filter lies above a lower threshold value which depends on whether or not a regeneration operation is proceeding;
    c) the exhaust gas volume flow lies below an upper threshold value; and
    d) the value pair ($\Delta P_i$, $\Delta V_i$) is not taken into account for a time interval above a first threshold value during no-load operation, although this condition is set aside as soon as the time interval lies above a second threshold value, either at least one of conditions b) - d) is fulfilled, or all conditions a) - d) are fulfilled.

2.  Method according to Claim 1, **characterized in that** the calculation step is performed by applying the least squares method.

3.  Method according to Claim 1 or 2, **characterized in that** the calculation step for the third variable (dP/dV) is performed with the aid of the following relationship:

$$dP/dV = \frac{\sum_{i=0}^{n} \Delta P_{korr,i} * \Delta V_i}{\sum_{i=0}^{n} (\Delta V_i)^2} .$$

$\Delta P_{korr,i}$ designating a corrected differential pressure which is calculated from the differential pressure $\Delta P_i$, measured at the measurement instant, by subtracting a correction term quadratically dependent on the exhaust gas volume flow.

4.  Method according to Claim 3, **characterized in that** the calculation of the third variable (dP/dV) is carried out recursively until a maximum number of measured values is reached, or until a predetermined range of the exhaust gas volume flow is covered.

5.  Apparatus for estimating the soot charge of a diesel particulate filter, **characterized in that** the apparatus is designed to execute a method according to one of the preceding claims.

**Revendications**

1.  Procédé pour évaluer la charge en suie d'un filtre à particules diesel, le procédé présentant les étapes suivantes :

    déterminer, à une pluralité d'instants de mesure, respectivement une paire de valeurs ($\Delta P_i$, $\Delta V_i$), chaque paire de valeurs ($\Delta P_i$, $\Delta V_i$) comprenant une première grandeur ($\Delta P_i$), qui est caractéristique de la pression différentielle (dP) qui se forme de part et d'autre du filtre à particules diesel à un instant de mesure, et
    une deuxième grandeur ($\Delta V_i$), qui est caractéristique du débit volumique de gaz d'échappement (dV) qui s'écoule à cet instant de mesure à travers le filtre à particules diesel,
    calculer, à partir de la paire de valeurs ($\Delta P_i$, $\Delta V_i$) déterminée, une troisième grandeur (dP/dV) qui est caractéristique de la charge en suie du filtre à particules diesel,

**caractérisé en ce que**
une paire de valeurs ($\Delta P_i$, $\Delta V_i$) n'est prise en compte lors du calcul de la troisième grandeur que si parmi les conditions suivantes :

a) le débit volumique de gaz d'échappement est supérieur à une valeur de seuil inférieure ;
b) la température du filtre à particules diesel est supérieure à une valeur de seuil inférieure, laquelle dépend de la présence ou non d'un mode de régénération,
c) le débit volumique de gaz d'échappement est inférieur à une valeur de seuil supérieure ; et
d) la paire de valeurs ($\Delta P_i$, $\Delta V_i$) n'est pas prise en compte au régime de ralenti pendant un intervalle de temps au-dessus d'une première valeur de seuil, cette condition étant cependant annulée dès que l'intervalle de temps est supérieur à une deuxième valeur de seuil
soit au moins l'une des conditions b)-d) est remplie, soit toutes les conditions a)-d) sont remplies.

2. Procédé selon la revendication 1, **caractérisé en ce que** l'étape de calcul est exécutée en utilisant la méthode du carré d'erreur.

3. Procédé selon la revendication 1 ou 2,
**caractérisé en ce que** l'étape du calcul de la troisième grandeur (dP/dV) est exécutée au moyen de la formule suivante :

$$dP/dV = \frac{\sum_{i=0}^{n} \Delta P_{korr,i} * \Delta V_i}{\sum_{i=0}^{n} (\Delta V_i)^2}$$

$\Delta P_{korr,i}$ désignant une pression différentielle corrigée qui est calculée à partir de la pression différentielle $\Delta P_i$, mesurée à l'instant de mesure en soustrayant un terme de correction qui dépend du carré du débit volumique de gaz d'échappement.

4. Procédé selon la revendication 3, **caractérisé en ce que** le calcul de la troisième grandeur (dP/dV) est effectué de manière récurrente en atteignant un nombre maximum de valeurs mesurées ou jusqu'à avoir couvert une plage prédéfinie de débit volumique de gaz d'échappement.

5. Dispositif pour évaluer la charge en suie d'un filtre à particules diesel, **caractérisé en ce que** le dispositif est conçu pour mettre en oeuvre un procédé selon l'une des revendications précédentes.

## Fig. 1

## Fig. 2

## Fig. 3

Fig. 4

EP 1 854 971 B1

12

Fig. 5

Fig. 6

Fig. 7

Fig. 8

16

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2872212 A1
- DE 19741973 C1
- US 20040159099 A1
- EP 1296032 A1
- EP 1475523 A1
- US 6405528 B1
- JP 10259711 B